# EUROPEAN PATENT APPLICATION

(11) **EP 4 362 191 A1**
(43) Date of publication of application: **01.05.2024**
(21) Application number: 23831754.9
(22) Date of filing: 05.06.2023
(51) Int. Cl.: H01M 50/258, H01M 50/211, H01M 10/613, H01M 10/655, H01M 10/6556

(54) **BATTERY PACK**

(30) Priority: 27.06.2022 KR 20220078225; 01.06.2023 KR 20230070836
(71) Applicant: LG Energy Solution, Ltd., Seoul 07335 (KR)
(72) Inventor: JANG, Byung Do, Daejeon 34122 (KR); LEE, Jae Hyun, Daejeon 34122 (KR); KIM, Dae Gil, Daejeon 34122 (KR); LEE, Hyoung Suk, Daejeon 34122 (KR)
(74) Representative: Plasseraud IP
(86) International application number: PCT/KR2023/007697
(87) International publication number: WO 2024/005394

(57) **Abstract**

The present technology relates to a battery pack including a plurality of battery assemblies and a pack housing capable of accommodating the plurality of battery assemblies, wherein the pack housing includes an assembly of unit frame that may be coupled in a line in a lateral direction so that a bottom area of the battery pack may be freely expanded. In addition, in the battery pack of the present invention, the battery assemblies are directly accommodated in the pack housing without a battery module, thereby simplifying a structure and reducing the number of parts and a space occupied by the parts. Thus, provided is a battery pack in which manufacturing costs can be reduced and the energy density of the battery pack can be increased.

## Description

### [Technical Field]

The present invention relates to a battery pack accommodating a plurality of battery assemblies.

More specifically, the present invention relates to a battery pack in which unit frames usable as common parts are used to constitute the battery pack, thereby allowing the size of the battery pack to be freely changed and expanded in accordance with the type, size, and number of battery cells and required electric capacity.

This application claims the benefit of priority based on Korean Patent Application No. 10-2022-0078225, filed on June 27, 2022, and Korean Patent Application No. 10-2023-0070836, filed on June 01, 2023, and the entire contents of the Korean patent applications are incorporated herein by reference.

### [Background Art]

Battery packs applied to electric vehicles or the like have a structure in which a plurality of battery modules including a plurality of secondary batteries are connected in series or parallel to obtain high output power. The secondary battery may include positive and negative electrode current collectors, a separator, an active material, an electrolyte, and the like and may be repeatedly charged or discharged through electrochemical reactions between the components.

However, conventional battery packs have the following problems.

When the type or size of battery cells changes or when a capacity of a battery pack needs to be changed through an increase or decrease in the number of battery cells, the size or specification of the battery pack that accommodates the battery cell should be changed. In conventional battery packs, since the standard of a base plate was set, the size or area of the battery pack could not be freely changed. In particular, when various types of battery packs with new specifications and capacities need to be manufactured according to the types of newly released vehicles, it has been difficult to respond to the types of newly released vehicles. That is, conventional battery packs have a problem that the degree of freedom in design change is significantly reduced.

Therefore, there is a need to develop a technology capable of freely changing a size or area according to the types of battery cells or vehicles in which the cells are used.

### [Related Art Documents]

### [Patent Documents]

Korean Patent Publication No. 10-2022-0014027

### [Disclosure]

### [Technical Problem]

An object of the present invention is to provide a battery pack in which unit frames usable as common parts are used to constitute the battery pack, thereby allowing the size of the battery pack to be freely changed and expanded in accordance with the type, size, and number of battery cells and required electric capacity.

### [Technical Solution]

A battery pack according to one embodiment of the present invention includes a plurality of battery assemblies, and a pack housing configured to accommodate the battery assemblies, wherein the pack housing includes a unit frame assembly, which is an assembly of a plurality of unit frames each including a sidewall and a base extending in one direction from a lower end portion of the sidewall, an end portion of the base at the lower end portion of the sidewall in one unit frame is coupled to an end portion of the base extending in the one direction in a subsequent unit frame to sequentially couple the unit frames in a line in a lateral direction and form the unit frame assembly, a front frame coupled to a front end of the unit frame assembly in a front-rear direction, and a rear frame coupled to a rear end of the unit frame assembly in the front-rear direction, and each battery assembly is accommodated in each unit frame such that a lower surface is supported on the base of each unit frame and both side surfaces are supported on the sidewalls of adjacent unit frames, which are opposite to each other.

A height of the sidewall may be greater than a height of the battery assembly.

A stepped portion, which has a shape matching a shape of a front end portion of the base of the subsequent unit frame, may be formed at the lower end portion of the sidewall of the base of the unit frame, and the front end portion of the base of the subsequent unit frame may be coupled to the stepped portion.

The battery pack may further include a first side frame coupled to the base of a foremost unit frame of the unit frame assembly in the one direction.

The lower surface of the battery assembly accommodated in the foremost unit frame may be supported on the base of the foremost unit frame, and each of both side surfaces may be supported on one of the first side frame and the sidewall of the foremost unit frame opposite to the first side frame.

The battery pack may further include a second side frame coupled to the sidewall of a rearmost unit frame of the unit frame assembly in the one direction.

A width of the sidewall of a rearmost unit frame of the unit frame assembly in the one direction may be equal to a width of the first side frame.

The sidewall that is positioned at the end portion of the base extending in the one direction of the foremost unit frame of the unit frame assembly in the one direction may be defined as a second sidewall, and the second sidewall is opposite to the sidewall.

The lower surface of the battery assembly accommodated in the foremost unit frame in the one direction may be supported on the base of the foremost unit frame, and each of both side surfaces may be supported on one of the sidewall and the second sidewall.

A width of the second sidewall may be greater than a width of the sidewall of other unit frames.

A distance between the opposite sidewalls of the adjacent unit frames of the unit frame assembly may be less than a width of each battery assembly.

The battery assembly may include at least one buffer pad between stacked battery cells.

A heat transfer member may be provided between the battery assembly and the base.

The base may have a cooling passage therein, and the front frame and the rear frame may each have a cooling passage communicating with the cooling passage of the base.

Each unit frame may include two or more sidewalls positioned in a line at a predetermined interval in the front-rear direction and one base that extends in the one direction from the lower end portion of each sidewall and is elongated in the front-rear direction, the plurality of battery assemblies may be disposed in two or more columns in the front-rear direction to correspond to the number of sidewalls, and the battery assemblies in each column may be accommodated in each unit frame such that the lower surface is supported on one base of each unit frame and each of both side surfaces is supported on the sidewalls of each of the adjacent unit frames that are opposite to each other and are disposed in the front-rear direction.

The battery pack may further include a center frame that is positioned in an interval between the sidewalls spaced apart from each other in the front-rear direction to separate the battery assemblies into column units, extends along the bases of the unit frames in the lateral direction, and is coupled to the unit frame assembly.

The pack housing may further include a pack cover configured to cover the battery assembly and coupled to the unit frame assembly.

### [Advantageous Effects]

According to the present invention, as the assembly number of unit frames usable as common parts is increased or decreased, the size and area of a battery pack can be freely changed. Therefore, the size of the battery pack can be changed according to the required specifications, thereby greatly improving the degree of freedom in design of the battery pack. In addition, production costs of parts can be reduced by converting a unit frame into a standard part or a common part.

### [Brief Description of the Drawings]

FIG. 1 is a schematic view illustrating a structure of a typical battery module.
FIG. 2 is a schematic view of a conventional battery pack.
FIG. 3 is a schematic cross-sectional view of a structure of the conventional battery pack.
FIG. 4 is a partially exploded perspective view illustrating a battery pack according to one embodiment of the present invention.
FIG. 5 shows schematic views of a battery assembly accommodated in the battery pack of the present invention.
FIG. 6 is an exploded perspective view of a pack housing of the battery pack of the present invention.
FIG. 7 shows schematic views illustrating a process of coupling unit frames which are components of the battery pack of the present invention.
FIG. 8 is a schematic perspective view illustrating the battery assembly installed in the unit frame according to the present invention.
FIG. 9 is a front view illustrating the battery assembly installed in the unit frame according to the present invention.
FIG. 10 shows schematic views illustrating a process of installing the battery assembly in the battery pack of the present invention.
FIG. 11 shows schematic views illustrating a comparison between the conventional battery pack and the battery pack of the present invention.
FIG. 12 is a partially exploded perspective view illustrating a battery pack according to another embodiment of the present invention.
FIG. 13 is a perspective view illustrating modified examples of unit frames.
FIG. 14 is a partially exploded perspective view illustrating a battery pack according to still another embodiment of the present invention.
FIG. 15 is a view illustrating the coupling between a unit frame and a battery assembly in the battery pack of the embodiment of FIG. 14.
FIG. 16 is a schematic view of a unit frame, which is a component of a battery pack, according to a modified example of the present invention.

### [Description of reference numerals]

10: battery module
100: cell stack base unit
110: battery cell
120: busbar assembly
121: inter-busbar
122: terminal busbar
130: buffer pad
200, 200': unit frame assembly
210, 220, 230, T1, T2, T3; unit frame
211, 221, 231: sidewall
212, 222, 232: base
250: center frame
300: front frame
400; rear frame
500: first side frame
500': second side frame
600: pack cover
1100, 2100: pack housing
1000,2000: battery pack

### [Detailed Description of the Preferred Embodiments]

The present invention will become more apparent by describing in detail the embodiments of the present invention with reference to the accompanying drawings. It should be understood that the embodiments disclosed herein are illustrative only for better understanding of the present invention, and that the present invention may be modified in various ways. In addition, for ease understanding of the present invention, the accompanying drawings are not drawn to actual scale, but the dimensions of some components may be exaggerated.

Hereinafter, the present invention will be described in detail.

### (First Embodiment)

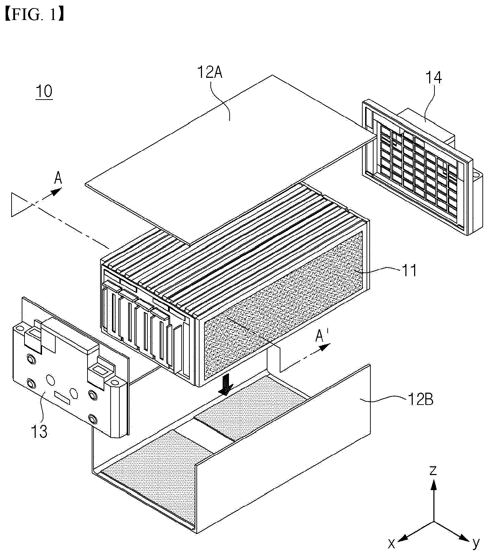

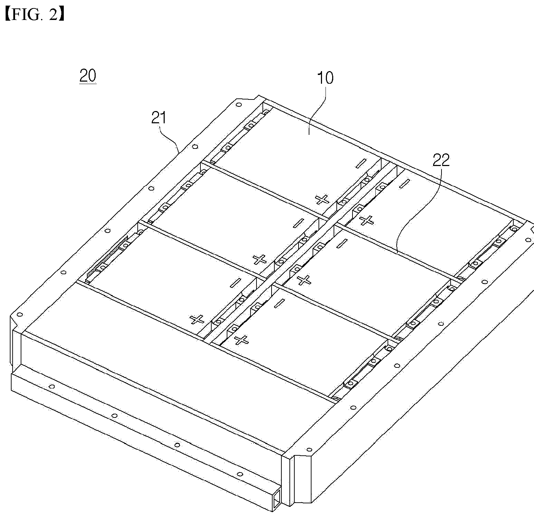

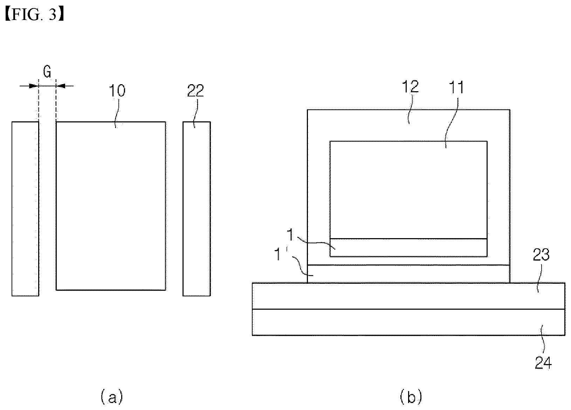

FIG. 1 is a schematic view illustrating a structure of a typical battery module. FIG. 2 is a schematic view of a conventional battery pack. FIG. 3 is a schematic cross-sectional view of a structure of the conventional battery pack.

As shown in FIG. 1, a typical battery module 10 includes a module housing 12 (12A and 12B), which accommodates a plurality of battery cells 11, and a front end plate 13 and a rear end plate 14 that cover front and rear ends of the module housing. In addition, a heat transfer member 1 made of a thermal conductive adhesive or the like is positioned between the battery cell and the module housing (see FIG. 3).

In FIGS. 2 and 3, a plurality of battery modules 10 are illustrated as being installed in a pack housing 21 of a battery pack 20. Each battery module 10 is installed between partition walls 22 provided on a base plate 23 of the pack housing 21. In addition, a heat transfer member 1' made of a thermal conductive adhesive or the like may be additionally disposed between the battery module and the base plate 23 on which the module is mounted. A cooling plate 24 may be disposed below the base plate 23.

In the conventional battery pack, since the standard of the base plate 23 is set, the size or area of the battery pack cannot be freely changed.

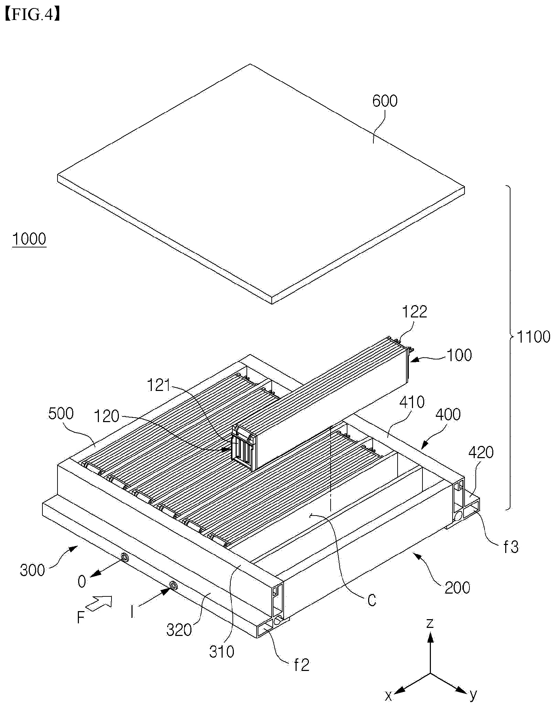

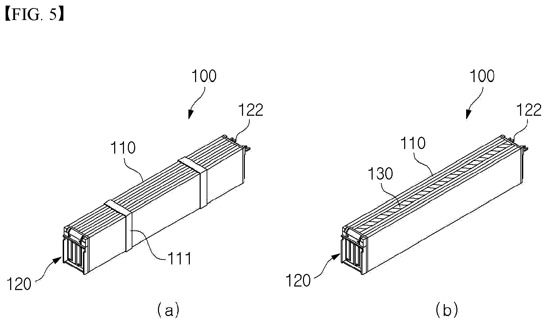

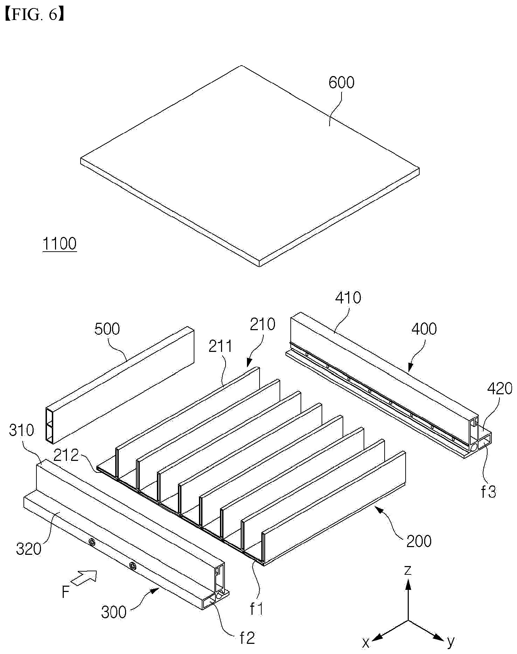

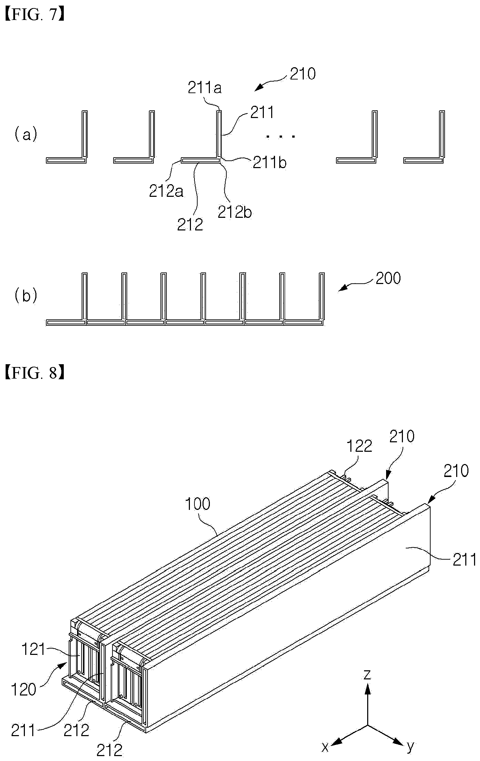

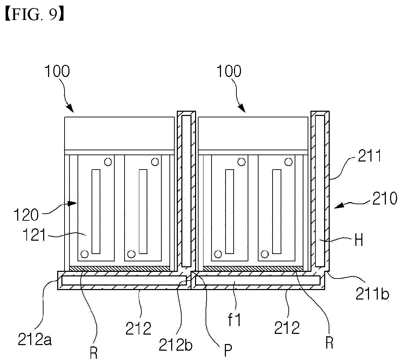

FIG. 4 is a partially exploded perspective view illustrating a battery pack according to one embodiment of the present invention. FIG. 5 shows schematic views of a battery assembly accommodated in the battery pack of the present invention. FIG. 6 is an exploded perspective view of a pack housing of the battery pack of the present invention. FIG. 7 shows schematic views illustrating a process of coupling unit frames which are components of the battery pack of the present invention. FIGS. 8 and 9 are schematic perspective and front views illustrating the battery assembly installed in the unit frame according to the present invention.

Terms indicating directions such as forward, rearward, leftward, rightward, upward, downward directions used herein may be changed according to a position of an observer or the arrangement form of an object. On the other hand, for convenience of description, in the present specification, directions are classified into forward, rearward, leftward, rightward, upward, downward directions based on a view from a direction indicated by an arrow F of FIG. 4. That is, a front-rear direction is defined as an X direction, a left-right direction is defined as a Y direction, and a height direction is defined as a Z direction.

The battery pack according to one embodiment of the present invention may include a plurality of battery assemblies and a pack housing that accommodates the battery assemblies.

The battery assembly may include a plurality of battery cells. The battery cells may be classified into pouch-type battery cells and can-type battery cells according to the shape of a case. The can-type battery cells may include cylindrical battery cells and prismatic battery cells. In addition, each of the battery cells includes an electrode assembly embedded in a battery case. The electrode assembly includes a positive electrode, a negative electrode, and a separator interposed between the positive electrode and the negative electrode. The electrode assembly may be classified into a jelly-roll type electrode assembly and a stack-type electrode assembly according to an assembly form. The jelly-roll type electrode assembly is formed by winding a positive electrode, a negative electrode, and a separator interposed therebetween. The stack-type electrode assembly is formed by sequentially stacking a positive electrode, a separator, and a negative electrode.

The battery assembly may be a battery module 10 including a module housing that accommodates the plurality of battery cells as shown in FIG. 1. The battery module may have a form in which a portion of the module housing accommodating the battery cells is removed. For example, a battery module, which includes a module housing in which an upper housing 12A is removed or a bottom of a lower housing 12B is removed to simplify a structure, may be the battery assembly of the present invention.

Alternatively, as shown in FIGS. 4 and 5, a battery cell stack in which a module housing itself surrounding upper, lower, left, and right surfaces of a plurality of battery cells is removed may also be the battery assembly.

In the embodiment shown in FIGS. 4 and 5, the battery cell stack in which a plurality of battery cells 110 are stacked, that is, a cell stack base unit 100, is applied as the battery assembly.

The battery cells 110 may be stacked such that side surfaces thereof are in contact with each other, and side surfaces of adjacent battery cells 110 may be fixed to each other through a double-sided tape. Alternatively, the plurality of stacked battery cells 110 may be tied together with a band 111 to constitute one cell stack base unit 100 (see FIG. 5 (a)). In the present embodiment, as shown in FIG. 4, the cell stack base units 100 may be provided to be stacked in the left-right direction (or horizontal direction). However, if necessary, it is also possible to configure the battery cells 110 to be stacked in a vertical direction (height direction).

In the present embodiment, busbar assemblies 120 may be coupled to electrode leads at front and rear end portions of the cell stack base unit 100. The busbar assembly 120 may include an inter-busbar 121 that electrically connects the battery cells or a terminal busbar 122 that may be connected to an external power supply. The number of battery cells 110 stacked in one cell stack base unit 100 may be, for example, 2, 4, 6, or 8, but is not limited thereto.

The cell stack base unit 100 may include at least one buffer pad 130 between the stacked battery cells 110 (see FIG. 5(b)). The buffer pad is for absorbing the expansion of the battery cell 110 due to a swelling phenomenon.

In the present embodiment, an example of a case in which a pouch-type battery cell is used as the battery cell 110 has been described, but the present invention is not limited thereto. For example, the battery assembly may be constituted using can-type battery cells.

A pack housing 1100 of the present invention may include a unit frame assembly 200, and a front frame 300 and a rear frame 400 respectively coupled to a front end and a rear end of the unit frame assembly 200 in the front-rear direction.

In the present invention, a plurality of unit frames 210 supporting a lower surface and one side surface of the battery assembly may be provided, and the unit frames may be sequentially coupled like Lego blocks to increase or decrease a bottom area of the battery pack 1000 as needed. That is, the unit frame assembly 200 may perform functions of a base plate and a partition wall of a conventional battery pack.

Referring to FIGS. 6 and 7, the unit frame 210 includes a sidewall 211 extending in the height direction, and a base 212 extending from a lower end portion 211b of the sidewall in one direction (one of left and right directions). The sidewall 211 includes end portions 211a and 211b vertically disposed in the height direction. The base 212 laterally extends and includes both end portions 212a and 212b in a horizontal direction. The end portion 212b at a right side of the base 212 is connected to the lower end portion 211b of the sidewall. The bases of the unit frames are sequentially coupled in a line in one direction to form the unit frame assembly 200. That is, the end portion 212b of the base at the lower end portion of the sidewall in one unit frame is coupled to the end portion 212a of the base extending in one direction in a subsequent unit frame to sequentially couple the unit frames 210 in a line in a lateral direction (left-right direction), thereby forming the unit frame assembly 200. The base 212 supports the lower surface of each battery assembly. Accordingly, the coupled bases form the base plate of the conventional battery pack. When the number of coupled unit frames 210 is increased or decreased, the unit frame assembly 200 may become larger or smaller in the lateral direction. That is, the bottom area of the battery pack 1000 constituted by the bases may be changed as needed.

In addition, the sidewall 211 of the unit frame 210 functions as a partition wall for separating the battery modules in the conventional battery pack. That is, as shown in FIG. 7, the unit frames 210 are sequentially coupled in the lateral direction so that the sidewalls 211 of adjacent unit frames 210 are disposed opposite to each other. A battery assembly, such as the battery module 10 or the cell stack base unit 100, may be disposed in a space between the sidewalls 211 disposed opposite to each other. Accordingly, the unit frames 210 may be sequentially coupled in the lateral direction, thereby increasing the area of a bottom on which the battery assembly is disposed and naturally increasing the number of partition walls for separating the battery assemblies.

In this way, like Lego blocks, as the number of coupled unit frames is changed to couple the unit frames in the lateral direction, the size of the battery pack can be adjusted to satisfy various requirements. Accordingly, the electric capacity of the battery pack can also be freely adjusted to satisfy the required performance. Therefore, according to the present invention, the degree of freedom in design of the battery pack can be greatly increased.

Referring to FIGS. 8 and 9, each battery assembly has a predetermined width in a cell stacking direction (parallel to the left-right direction) and is elongated in a longitudinal direction (parallel to the front-rear direction) to have a predetermined length. For example, each cell stack base unit 100 is accommodated in a space between adjacent unit frames 210 of the unit frame assembly 200. That is, a lower surface of each cell stack base unit 100 is supported on the base 212 of each unit frame 210. In addition, the cell stack base unit 100 is accommodated in each unit frame 210 of the unit frame assembly 200 such that each of both side surfaces of the cell stack base unit 100 in a width direction is supported on one of the opposite sidewalls 211 of adjacent unit frames 210.

When the battery module 10 of FIG. 1 is applied as the battery assembly, the battery module 10 is accommodated in the space between adjacent unit frames 210. In addition, a lower surface of the battery module 10 (lower surface of the lower housing 12B) is supported on the base 212 of each unit frame 210. In addition, the battery module 10 is accommodated in each unit frame 210 of the unit frame assembly 200 such that each of both side surfaces of the battery module 10 (both side surfaces of the lower housing 12B) in the width direction is supported on one of the opposite sidewalls 211 of adj acent unit frames 210.

Meanwhile, the unit frame 210 extends to a predetermined length in the front-rear direction. That is, the sidewall 211 and the base 212 extend in the front-rear direction. Lengths of the sidewall and the base in the front-rear direction are determined to sufficiently accommodate a length of the battery assembly in the front-rear direction. That is, a length of the unit frame 210 in the front-rear direction is determined according to a length of the battery cell 110 constituting the battery assembly. Alternatively, as will be described below, when a plurality of battery assemblies 100 are arranged in a line in the front-rear direction, the unit frame 210 may be formed to be elongated in the front-rear direction so as to correspond to the plurality of battery assemblies. That is, according to the present invention, not only is a bottom size of the battery pack changed by increasing or decreasing the number of coupled unit frames 210 in the lateral direction, but also the bottom size of the battery pack is increased by increasing the length of the unit frame 210 in the front-rear direction according to a length of the battery assembly or the number of battery assemblies arranged in a longitudinal direction.

As shown in FIG. 9, a height of the sidewall 211 of the unit frame 210 may be formed to be greater than a height of the battery assembly, for example, the cell stack base unit 100. Thus, the sidewall 211 can stably support the side surface of the battery assembly.

The sidewall 211 and the base 212 may be manufactured by being integrally molded. Alternatively, two flat plates may be vertically disposed such that one ends are in contact with each other, and the ends of the flat plates in contact with each other may be welded and coupled to manufacture the unit frame 210.

A metal material such as aluminum may be extruded such that internal empty spaces H and f1 are formed therein, thereby manufacturing the unit frame 210 as a hollow frame. In this way, the unit frames are formed in a hollow form, thereby reducing the weight of the battery pack and increasing energy efficiency. In addition, when a rib-shaped partition wall is formed in the internal space, the mechanical rigidity of the frames can be maintained at a reliable level. As will be described below, a hollow space formed in the unit frame 210 can also be used as a passage through which a cooling fluid passes or a venting channel through which venting gas generated in the battery pack is vented

The unit frames may be coupled to each other, for example, through welding, such as friction stir welding. In this case, a stepped portion P, which has a shape matching a shape of the front end portion 212a of the base of a subsequent unit frame, may be formed at the lower end portion 212b of the sidewall of the base 212 of the unit frame 210. That is, as shown in FIGS. 7 and 9, the stepped portion P is provided at the lower end portion 212b of the base at the lower end portion of the sidewall (or the lower end portion 211b of the sidewall connected to the end portion of the base). The shape of the stepped portion is formed to engage with the shape of the front end portion 212a of the base of the subsequent unit frame. Therefore, the bases 212 adjacent to each other in the lateral direction are coupled to engage with each other at the stepped portion P, thereby increasing the coupling strength of the unit frame 210. In addition, since coupling surfaces of the stepped portion P and the base can support the load of the sidewall 211 of the unit frame and the battery assembly in the height direction, the load of the battery assembly can be appropriately distributed.

Referring to FIGS. 4 and 6, the front frame 300 is coupled to the front end of the unit frame assembly 200 in the front-rear direction. In addition, the rear frame 400 is coupled to the rear end of the unit frame assembly 200 in the front-rear direction.

The front frame and the rear frame cover front and rear surfaces of the battery assembly and are coupled to the unit frame assembly 200. Accordingly, an accommodation space for the battery assembly is formed by the base 212 of the unit frame, the opposite sidewalls 211 of adjacent unit frames, the front frame 300, and the rear frame 400.

The front frame 300 is elongated in the left-right direction and may have an erect shape in the height direction. The front frame may include a front cover 310 extending in the height direction, and a front plate 320 protruding forward from a lower portion of the front cover 310. The front plate 320 may be fixedly coupled to a structure such as a vehicle.

The rear frame 400 is elongated in the left-right direction and may have an erect shape in the height direction. The rear frame may have a shape that is the same as or different from that of the front frame. The rear frame includes a rear cover 410 extending in the height direction, and a rear plate 420 protruding rearward from a lower portion of the rear cover 410 to have the same shape as the front frame. The rear plate 420 may be fixedly coupled to a structure such as a vehicle.

A height of each of the front cover and the rear cover may be the same as the height of the sidewall 211 of the unit frame.

Referring to FIG. 6, in the foremost unit frame 210 of the unit frame assembly 200 in one direction, the base has an open end portion. Therefore, a battery assembly cannot be accommodated on the base of the foremost unit frame 210. In this case, the base of the foremost unit frame 210 may be used as a coupling portion to be coupled to a structure such as a vehicle. In such an example, lateral lengths of the front frame 300 and the rear frame 400 coupled to the unit frame assembly 200 may extend from the rearmost unit frame in one direction to the sidewall of the foremost unit frame in one direction

However, in order to accommodate the battery assembly even in the foremost unit frame 210, for example, the battery pack may further include a first side frame 500 coupled to the base of the foremost unit frame 210. The first side frame 500 may have an elongated shape in the front-rear direction. A length of the first side frame 500 in the front-rear direction may be equal to the length of the unit frame 210 in the front-rear direction. Accordingly, the first side frame 500 may be coupled to the end portion of the base of the foremost unit frame 210 to cover the foremost end of the unit frame assembly 200 in one direction. Accordingly, a battery assembly can be additionally accommodated in a space formed by the first side frame 500 and the foremost unit frame 210. In this case, the lower surface of the battery assembly is supported on the base of the foremost unit frame 210, and each of both side surfaces thereof is supported on one of the first side frame 500 and the sidewall 211 of the foremost unit frame 210 opposite thereto. In this case, the lengths of the front frame 300 and the rear frame 400 in the left-right direction may extend to the first side frame 500 from the rearmost unit frame 210 in one direction. Accordingly, an accommodation space for the foremost battery assembly in one direction is formed by the base 212 of the foremost unit frame 210, the first side frame 500, the front frame 300, and the rear frame 400. A height of the first side frame 500 may be equal to a height of each of the front frame 300 and the rear frame 400.

In addition to the unit frame 210, the first side frame 500, the front frame 300, and the rear frame 400 may also be manufactured as hollow frames in which a space is formed. Therefore, the weight of the battery pack can be further reduced. In addition, a rib-shaped partition wall is formed in the internal space, thereby maintaining the mechanical rigidity of the frames at a reliable level.

In addition, the pack housing 1100 may further include a pack cover 600 that covers the battery assembly and is coupled to the unit frame assembly 200. As shown in FIG. 6, an edge of a lower surface of the pack cover 600 may be coupled to each of upper end portions of the front frame 300, the rear frame 400, the first side frame 500, and the rearmost sidewall of the unit frame assembly 200.

As shown in FIG. 9, the base 212 of the unit frame 210 may have a cooling passage f1 therein. For example, when the base 212 is extrusion-molded, a space may be formed inside the base according to a direction in which an extruded member moves. The internal space may be divided into a plurality of hollow channels by partition walls such as ribs. A separate cooling passage may be installed in at least one of the hollow channels, or the hollow channel itself may be used as a cooling passage.

Therefore, according to the present invention, it is possible to constitute a unit frame assembly 200 including a cooling passage f1 that extends in the front-rear direction along the base 212. A cooling fluid may be allowed to flow through the cooling passage f1, thereby effectively cooling the battery assembly. In addition, since the base of the unit frame 210 is formed in an integrated cooling structure, unlike the related art, there is no need to install a separate cooling plate in the base. As a result, the height of the battery pack 1000 can be reduced to make the battery pack more compact.

In addition, as shown in FIG. 6, the front frame 300 and the rear frame 400 may respectively include cooling passages f2 and f3 communicating with the cooling passage f1 of the base. In this case, one of the front frame and the rear frame may include a refrigerant inlet and a refrigerant outlet, which communicate with the cooling passage. Alternatively, a refrigerant inlet may be formed in one of the front frame and the rear frame, and a refrigerant outlet may be formed in the other. Thus, in the battery pack of the present invention, a cooling path formed by the cooling passage f2 of the front frame 300, the cooling passage f1 of the unit frame assembly 200, and the cooling passage f3 of the rear frame can be designed in various ways.

A heat transfer member R may be provided between the battery assembly and the base 212. In order to smoothly transfer heat, the heat transfer member R may include at least some of heat conductive grease, a heat conductive adhesive, a heat conductive epoxy, and a heat dissipation pad, but the present invention is not limited thereto. In addition, since the heat transfer member R serves to fix the lower surface of the battery assembly to the base of the unit frame assembly 200, the heat transfer member R may be provided to have an adhesive strength of a predetermined level or more. Through the heat transfer member R, heat may be easily transferred to the base having the cooling passage, and thus heat dissipation of the battery pack can be effectively performed.

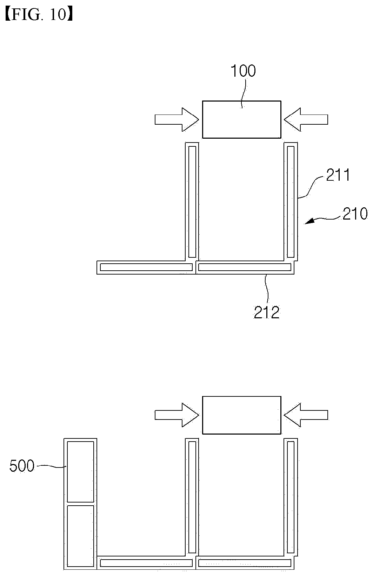

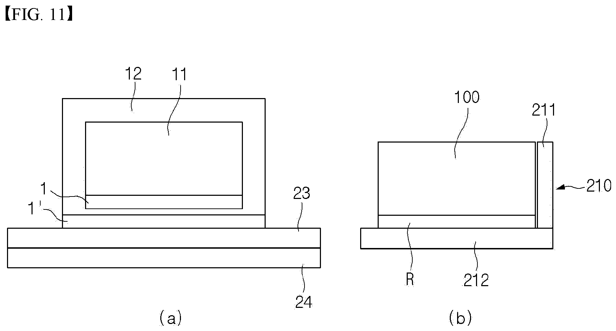

FIG. 10 shows schematic views illustrating a process of installing the battery assembly in the battery pack of the present invention. FIG. 11 shows schematic views illustrating a comparison between the conventional battery pack and the battery pack of the present invention.

A distance between the sidewalls 211 of adjacent unit frames of the unit frame assembly 200 may be less than a width of each battery assembly. For example, when the cell stack base unit 100 is used as a battery assembly, the distance between the sidewalls 211 may be formed to be less than a width of the cell stack base unit 100.

Therefore, in order to accommodate each cell stack base unit 100 in each unit frame 210, the cell stack base unit 100 should be compressed in a width direction (battery cell stacking direction) and inserted between the sidewalls 211 of adjacent unit frames 210. In addition, when the cell stack base unit 100 is compressed in the width direction, the buffer pad 130 may be compressed to easily compress the cell stack base unit 100.

On the other hand, when the battery module 10 is used as a battery assembly, there may be the following problems.

First, in order to constitute a battery module, a module housing, an end plate, and various other auxiliary parts are required, which increases manufacturing costs.

In addition, in order to install the battery module 10 between the partition walls 22 of the pack housing as shown in FIG. 3(a), an assembly tolerance G inevitably occurs. Therefore, the number of battery cells installed in the battery pack may be decreased as much as the assembly tolerance and the housing thickness of the battery module, which may reduce the energy density of the battery pack.

In addition, when the module housing 12 is installed on the battery cell 11 and the base plate 23 of the pack housing as shown in FIG. 3(b), for heat transfer efficiency, two layers of heat transfer members 1 and 1' installed above and below the module housing are required. In addition, due to the cooling plate 24 and the module housing 12, battery pack space in the height direction increases, and a pack weight increases. For this reason, manufacturing costs increase, and also energy density further decreases due to the increased weight of the battery pack and an expansion of an installation space.

However, when the cell stack base unit 100 is used as a battery assembly, the above-described problems can be solved.

That is, when the cell stack base unit is applied, since the cell stack base unit has a so-called cell-to-pack structure in which battery cells are directly accommodated in a pack housing without a module housing, processes and costs associated with production and assembly of module parts can be eliminated.

In particular, an assembly tolerance required for module installation can be eliminated, and since a space within a pack in the height direction can be made more compact and the weight of a battery pack can be reduced, an energy density occupying the same battery pack space can be further improved.

As such, according to the present invention, when the battery cell 110 is accommodated in the battery pack, there is no need to provide the assembly tolerance G required for using the conventional battery module. In addition, as described above, the cell stack base unit 100 may be compressed and inserted between the opposite sidewalls of the unit frames 210. Accordingly, since battery pack space can be saved in the left-right direction, more battery cells 110 can be installed in the same space, thereby improving energy density.

Meanwhile, a length of the base 212 of the unit frame 210 in the left-right direction may be determined in a range in which the distance between the sidewalls 211 of adjacent unit frames 210 is less than the width of each cell stack base unit 100. That is, the length of the base in the left-right direction can be appropriately determined in consideration of an insertion space for the cell stack base unit 100.

As described above, the battery assembly of the present invention can be firmly fixed by inserting both side surfaces at the opposite sidewalls of adjacent unit frames 210. In addition, the battery assembly is fixed to the base of the unit frame 210 through a heat transfer member such as a thermal conductive adhesive provided on the lower surface of the battery assembly. Therefore, according to the present invention, the battery assembly can be firmly coupled to each unit frame 210 without a separate fastening member, thereby improving the overall assembly.

In FIG. 11, the advantages of using the cell stack base unit 100 as the battery assembly are clearly shown.

In FIG. 11(b), the cell stack base unit 100 is directly accommodated in the pack housing without a module housing. Therefore, unlike the battery module in FIG. 11(a), an assembly tolerance is no need when accommodating a battery module in a pack, and a lateral width can be reduced as much as a thickness of the module housing. In addition, since there is no module housing, the heat transfer member R being positioned at one position between the cell stack base unit 100 and the base 212 is sufficient, thereby saving materials and further simplifying a cooling path to increase heat dissipation efficiency. In addition, since the base 212 has an integrated cooling structure with a cooling passage, a cooling plate is not required. In this way, when the cell stack base unit 100 is applied as the battery assembly, space is saved not only in the left-right direction but also in the height direction. Therefore, as compared with the conventional battery pack, more battery cells 110 can be accommodated in a space having the same volume, thereby greatly improving energy density.

Meanwhile, an electrical component assembly (not shown) may be accommodated in some unit frames included in the unit frame assembly 200 instead of a battery assembly. The electrical component assembly may accommodate a relay device, a current sensor, a fuse, a battery management system (BMS), and a manual service disconnector (MSD), and the like. The electrical component assembly may be packaged in the battery pack together with the battery assemblies so as notto be exposed to the outside.

### (Second Embodiment)

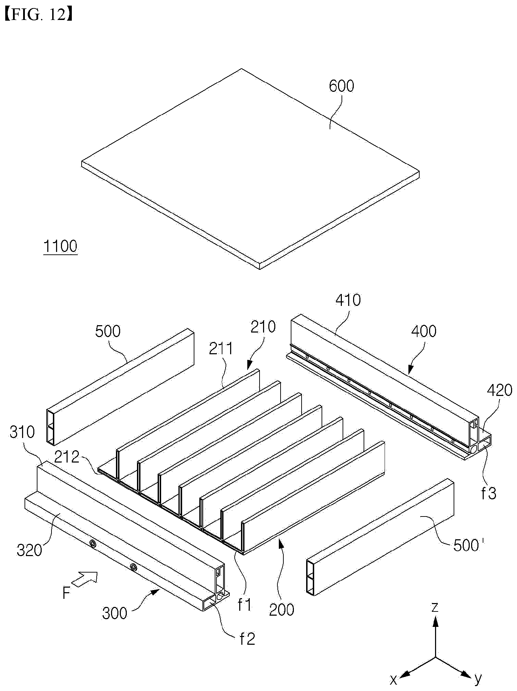

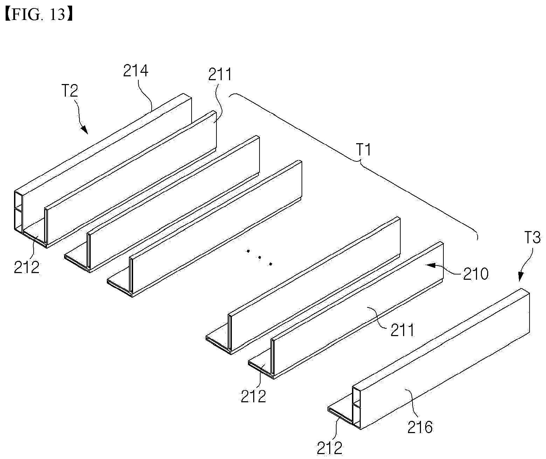

FIG. 12 is an exploded perspective view illustrating a battery pack according to another embodiment of the present invention. FIG. 13 is a perspective view illustrating modified examples of unit frames.

In the embodiment of FIG. 12, in addition to the battery pack of the embodiment of FIG. 6, the battery pack further includes a second side frame 500' coupled to a sidewall of the rearmost unit frame 210 of a unit frame assembly 200 in one direction.

Since the sidewall 211 of the rearmost unit frame 210 is thin in the embodiment of FIG. 6, the battery pack of the embodiment of FIG. 12 includes the second side frame 500' covering a right side of the battery pack. A length and a height of the second side frame 500' may be equal to those of a first side frame 500. In the present embodiment, since the sidewall of the rearmost unit frame 210 and the second side frame 500' are coupled to form a right wall of the battery pack, a width of the second side frame 500' may be made less than a width of the first side frame 500 by as much as a thickness of the sidewall.

In the embodiments of FIGS. 6 and 12, a first side frame 500 capable of covering one side surface of a battery assembly may be provided such that the battery assembly (for example, a cell stack base unit 100) may be accommodated in the foremost unit frame 210 of the unit frame assembly 200 in one direction.

In the left portion of the drawing of FIG. 13, a unit frame 211 including a second sidewall 214 is illustrated as a form in which the foremost unit frame 210 itself may accommodate the battery assembly instead of the first side frame. That is, the sidewall of the foremost unit frame 210 of the present embodiment, which is formed at an end portion of a base 212 extending in one direction is defined as the second sidewall 214, and the second sidewall 214 is opposite to a sidewall 211. Accordingly, unlike subsequent unit frames 210, the foremost unit frame 210 includes sidewalls 211 and 214 at both sides of the base. Accordingly, a battery assembly may be accommodated in the foremost unit frame 210 such that a lower surface of the battery assembly is supported on the base of the foremost unit frame 210, and both side surfaces thereof are supported on the sidewall 211 and the second sidewall 214. Since the second sidewall 214 forms a left wall of the battery pack, a width of the second sidewall may be greater than a width of the sidewall of other unit frames 210. For example, the width of the second sidewall may be equal to that of a first side frame.

In addition, the right portion of the drawing of FIG. 13 illustrates an example in which a width of the sidewall of the rearmost unit frame 210 of the unit frame assembly 200 is equal to the width of the first side frame. That is, in the present example, the second side frame 500' is not coupled to the sidewall of the rearmost unit frame 210, but the width of the sidewall of the rearmost unit frame 210 itself is increased. Therefore, a sidewall 216 of the rearmost unit frame is denoted by a reference numeral that is different from that of the normal sidewalls.

As described above, in the present embodiment, it has been proposed that the unit frame 210 may include three types of dedicated parts. That is, when there are three types of a unit frame T1 having a normal sidewall and a base, a foremost unit frame T2 having the second sidewall 214, and a rearmost unit frame T3 having a sidewall with a wide width, these unit frames may be appropriately coupled to constitute the unit frame assembly 200. In the case of the present embodiment, various types of unit frames can be standardized and manufactured in advance, and thus for example, there is no need to separately couple the first side frame 500 to the foremost unit frame.

### (Third Embodiment)

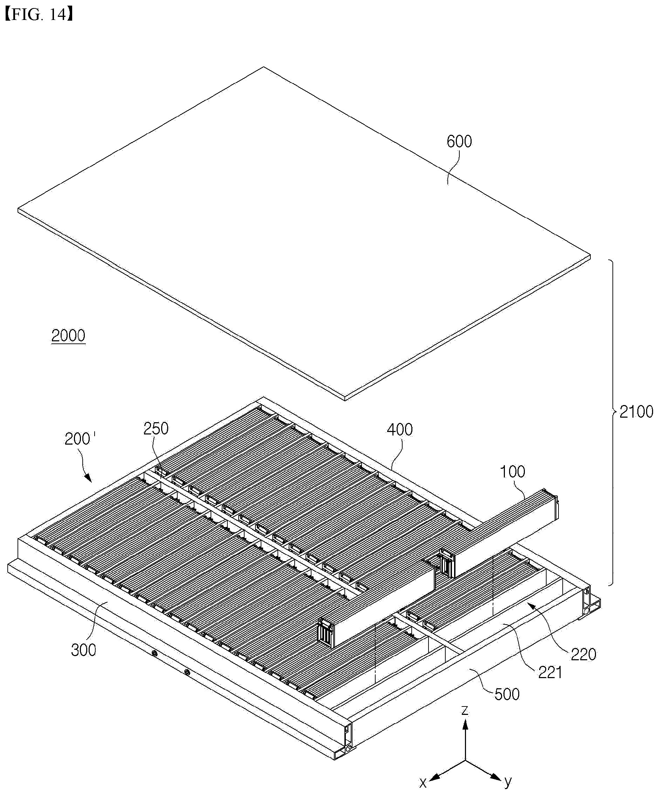

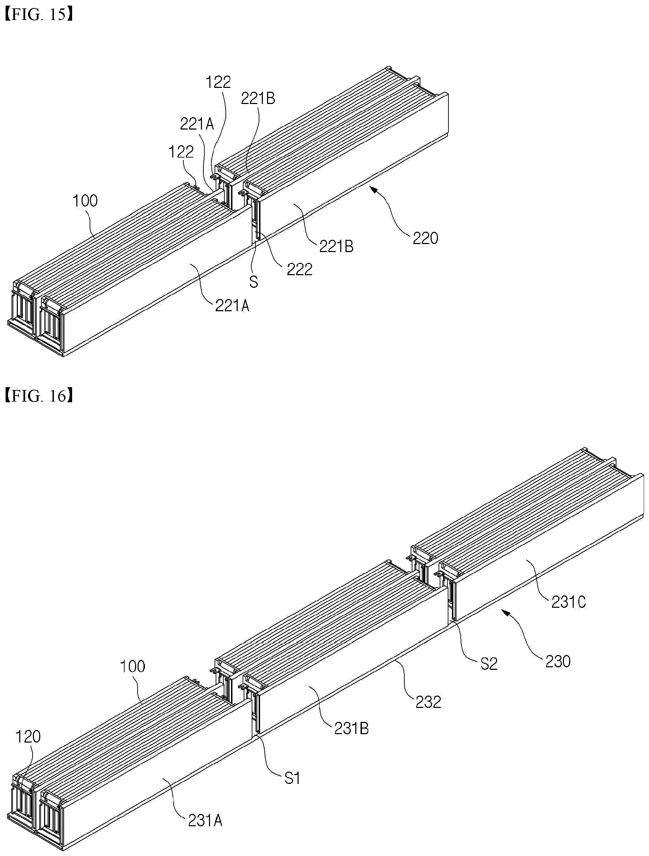

FIG. 14 is a perspective view illustrating a battery pack according to still another embodiment of the present invention. FIG. 15 is a view illustrating the coupling between a unit frame and a battery assembly in the battery pack of the embodiment of FIG. 14.

In the embodiment of FIG. 14, a plurality of battery assemblies are arranged side by side in a plurality of columns in a lateral direction (left-right direction) and are each accommodated in one of unit frames 210.

In the embodiment of FIG. 14, a structure of a battery pack 2000, which may accommodate the battery assemblies when disposed in two or more columns in a front-rear direction, is shown.

FIG. 15 illustrates a shape of the unit frame 210 when the battery assemblies are disposed in two or more columns in the front-rear direction as an example of the unit frame 210 having such a battery pack structure.

Referring to FIG. 15, a sidewall 221 of a unit frame 220 includes two sidewalls 221A and 221B spaced a predetermined interval apart from each other in the front-rear direction and positioned in a line. A base 222 extends in one direction from a lower end portion of each sidewall and is also elongated in the front-rear direction. That is, in the present embodiment, the sidewalls are provided in the same number as the number of columns of the battery assemblies (for example, cell stack base units 100). Accordingly, lower surfaces of the battery assemblies in two columns are supported on one base 222. Each of one side surfaces of the battery assemblies in each column is supported on one of two sidewalls 221A and 221B of the unit frame 220. As shown in FIG. 15, when two unit frames 220 are coupled in the lateral direction, a space in which the two columns of battery assemblies are accommodated is formed between the opposite sidewalls of the unit frames 220. As shown in FIG. 10, widths of the battery assemblies in the two columns may be compressed and inserted between the opposite sidewalls. Accordingly, the battery assemblies in each column are accommodated in the space such that the lower surfaces thereof are supported on one base 222 of the unit frame 220. In this case, both side surfaces of the base units 100 in each column are supported on respective sidewalls of adjacent unit frames 220 that are opposite to each other and are disposed in the front-rear direction.

In FIG. 14, the battery assemblies disposed in two columns in the front-rear direction are illustrated as being disposed side by side in the lateral direction in a plurality again and accommodated in the respective unit frames 210.

In this way, the battery assemblies are disposed in rows and columns in the front-rear and lateral directions, thereby greatly increasing the number of battery cells accommodated in the battery pack 2000. Accordingly, a larger and higher capacity battery pack can be constituted. Therefore, according to the present embodiment, as a bottom area of the battery pack can be further increased, the degree of freedom in design of the battery pack can be further increased.

Meanwhile, in the present embodiment, the sidewalls 221A and 221B of each unit frame 220 are spaced apart a predetermined interval S from each other in the front-rear direction. First, this is to separate the battery assemblies into front and rear columns to prevent the battery assemblies from interfering with each other. Second, this is to separate the battery assemblies and install a reinforcing member capable of reinforcing the structural rigidity of the battery pack in the interval S between the spaced sidewalls 221A and 221B.

When the unit frame 220 is elongated in the front-rear direction, the longitudinal rigidity of the battery pack weakens. In particular, as the number of battery assemblies accommodated in the unit frame 220 increases, a load received by the unit frame 220 also increases in a longitudinal direction. Therefore, a reinforcing member is required to reinforce the rigidity of the unit frame 220 or the battery pack in the front-rear direction (longitudinal direction). Referring to FIG. 14, a center frame 250 as a reinforcing member extends in the lateral direction along the bases of the respective unit frames 220 and is coupled to a unit frame assembly 200'. The center frame 250 naturally separates the battery assemblies in the front and rear columns. In addition, the center frame 250 extends in the lateral direction across the bases of the unit frame assembly 200' and is disposed in a space between the sidewalls 221A and 221B disposed in the front-rear direction. Accordingly, even when the unit frame assembly 200' is lengthened in the front-rear direction, the center frame 250 can reinforce the rigidity of the battery pack 2000 and firmly support the battery assembly.

FIG. 16 is a schematic view of a unit frame, which is a component of a battery pack, according to a modified example of the present invention.

In FIG. 16, sidewalls 231 of a unit frame 230 are illustrated as being disposed in three columns 231A, 231B, and 231C at predetermined intervals in a front-rear direction. In this case, three columns of battery assemblies (for example, cell stack base units 100) may be installed in the unit frame 230 in the front-rear direction.

Accordingly, a bottom area of a unit frame assembly and the battery pack further increases in the front-rear direction. In theory, there is no limitation on a length of the unit frame 230 in the front-rear direction or the number of sidewalls arranged in the front-rear direction. However, the required number of battery assemblies is determined according to an installation space in a vehicle and a required capacity of a battery pack. Accordingly, the set number of battery assemblies may be appropriately arranged by separating the battery assemblies into rows and columns in lateral and front-rear directions of the battery pack. In the present invention, by assembling unit frames in the lateral direction like Lego blocks, a unit frame assembly or a bottom portion of a battery pack can be easily changed according to the number of battery assemblies required in the lateral direction. In addition, a length of a unit frame in the front-rear direction can be lengthened in accordance with the number of columns of battery assemblies required in the front-rear direction, and as in the present embodiment, the number of sidewalls can also be adjusted in accordance with the number of respective columns.

In this way, according to the present invention, since a bottom area of one battery pack can be freely changed to respond to variously required design standards, it is possible to manufacture a highly versatile battery pack.

Meanwhile, as shown in FIG. 16, two intervals S1 and S2 are formed between the sidewalls of the unit frame 230 in which three columns of the battery assemblies may be disposed. Two center frames 250 may be disposed in the intervals. That is, even when the number of columns of battery assemblies increases in the front-rear direction, the center frame 250 is appropriately disposed on a base 232 in the interval between the sidewalls, thereby reinforcing the rigidity of the battery pack.

The description above is merely illustrating the technical spirit of the present invention, and various changes and modifications may be made by those skilled in the art without departing from the essential characteristics of the present invention. Therefore, the drawings disclosed in the present invention do not limit but describe the technical idea of the present invention, and the scope of the technical idea of the present invention is not limited by the drawings. The scope of protection of the present invention shall be interpreted on the basis of the accompanying claims, and it should be interpreted that all of the technical ideas included within the scope equivalent to the claims belong to the scope of the present invention.

## Claims

1. A battery pack comprising:
a plurality of battery assemblies; and
a pack housing configured to accommodate the battery assemblies,
wherein the pack housing includes a unit frame assembly, which is an assembly of a plurality of unit frames each including a sidewall and a base extending in one direction from a lower end portion of the sidewall, an end portion of the base at the lower end portion of the sidewall in one unit frame is coupled to an end portion of the base extending in the one direction in a subsequent unit frame to sequentially couple the unit frames in a line in a lateral direction and form the unit frame assembly, a front frame coupled to a front end of the unit frame assembly in a front-rear direction, and a rear frame coupled to a rear end of the unit frame assembly in the front-rear direction, and
each battery assembly is accommodated in each unit frame such that a lower surface of the battery assembly is supported on the base of each unit frame and both side surfaces of the battery assembly are supported on the sidewalls of adjacent unit frames, which are opposite to each other.

2. The battery pack of claim 1, wherein a height of the sidewall is greater than a height of the battery assembly.

3. The battery pack of claim 1, wherein a stepped portion, which has a shape matching a shape of a front end portion of the base of the subsequent unit frame, is formed at the end portion of the base at the lower end portion of the sidewall in the unit frame , and
the front end portion of the base of the subsequent unit frame is coupled to the stepped portion.

4. The battery pack of claim 1, further comprising a first side frame coupled to the base of a foremost unit frame of the unit frame assembly in the one direction.

5. The battery pack of claim 4, wherein the lower surface of the battery assembly accommodated in the foremost unit frame is supported on the base of the foremost unit frame, and each of both side surfaces of the battery assembly is supported on one of the first side frame and the sidewall of the foremost unit frame opposite to the first side frame.

6. The battery pack of claim 4, further comprising a second side frame coupled to the sidewall of a rearmost unit frame of the unit frame assembly in the one direction.

7. The battery pack of claim 4, wherein a width of the sidewall of a rearmost unit frame of the unit frame assembly in the one direction is equal to a width of the first side frame.

8. The battery pack of claim 1, wherein the sidewall that is positioned at the end portion of the base extending in the one direction of the foremost unit frame of the unit frame assembly in the one direction is defined as a second sidewall, and the second sidewall is opposite to the sidewall.

9. The battery pack of claim 8, wherein the lower surface of the battery assembly accommodated in the foremost unit frame in the one direction is supported on the base of the foremost unit frame, and each of both side surfaces of the battery assembly is supported on one of the sidewall and the second sidewall.

10. The battery pack of claim 8, wherein a width of the second sidewall is greater than a width of the sidewall of other unit frames.

11. The battery pack of claim 1, wherein a distance between the opposite sidewalls of the adjacent unit frames of the unit frame assembly is less than a width of each battery assembly.

12. The battery pack of claim 11, wherein the battery assembly includes at least one buffer pad between stacked battery cells.

13. The battery pack of claim 1, wherein a heat transfer member is provided between the battery assembly and the base.

14. The battery pack of claim 1, wherein the base has a cooling passage therein.

15. The battery pack of claim 14, wherein the front frame and the rear frame each have a cooling passage communicating with the cooling passage of the base.

16. The battery pack of claim 1, wherein each unit frame includes two or more sidewalls positioned in a line at a predetermined interval in the front-rear direction and one base that extends in the one direction from the lower end portion of each sidewall and is elongated in the front-rear direction,
the plurality of battery assemblies are disposed in two or more columns in the front-rear direction to correspond to the number of sidewalls, and
the battery assemblies in each column are accommodated in each unit frame such that the lower surface of each of the battery assembly is supported on one base of each unit frame and each of both side surfaces of each of the battery assembly is supported on the sidewalls of each of the adjacent unit frames that are opposite to each other and are disposed in the front-rear direction.

17. The battery pack of claim 16, further comprising a center frame that is positioned in an interval between the sidewalls spaced apart from each other in the front-rear direction to separate the battery assemblies into column units, extends along the bases of the unit frames in the lateral direction, and is coupled to the unit frame assembly.

18. The battery pack of any one of claims 1 to 17, wherein the pack housing further includes a pack cover configured to cover the battery assembly and coupled to the unit frame assembly.
